(19) Europäisches Patentamt
European Patent Office
Office européen des brevets

(11) **EP 2 615 418 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(21) Anmeldenummer: **12196492.8**

(22) Anmeldetag: **11.12.2012**

(51) Int Cl.:
**G01C 21/02** *(2006.01)*     **G01S 3/786** *(2006.01)*
**B64G 1/36** *(2006.01)*

(54) **Verfahren zur Erhöhung der Zuverlässigkeit von Sensorsystemen**

Method for increasing the reliability of sensor systems

Procédé destiné à améliorer la fiabilité de systèmes de capteur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2012 DE 102012000331**

(43) Veröffentlichungstag der Anmeldung:
**17.07.2013 Patentblatt 2013/29**

(73) Patentinhaber: **Jena-Optronik GmbH**
**07745 Jena (DE)**

(72) Erfinder:
• **Strietzel, Roland, Prof. Dr**
**02689 Sohland (DE)**
• **Michel, Klaus, Dr.**
**07747 Jena (DE)**
• **Ratzsch, Dietmar**
**07751 Wogau (DE)**

(74) Vertreter: **Ege Lee & Partner**
**Patentanwälte PartGmbB**
**Walter-Gropius-Straße 15**
**80807 München (DE)**

(56) Entgegenhaltungen:
**US-A1- 2003 080 255     US-B1- 6 285 927**

**Beschreibung**

Die Erfindung betrifft ein Verfahren zur Lagebestimmung eines Flugobjekts mit einem Sensorsystem mit mehreren mittels jeweils einer Optik und eines lichtempfindlichen Matrixdetektors Sternbildausschnitte erfassenden Sternsensoren mit gleichen oder unterschiedlichen Gesichtsfeldern, unterschiedlichen Blickrichtungen und einer Auswerteeinrichtung zur Berechnung von Lageinformation des Flugobjekts anhand eines Vergleichs der erfassten Sternbildausschnitte mit einem Sternkatalog.

Da die Lagebestimmung sehr entscheidend für die Realisierung von geplanten Missionen ist, kommt der Erhöhung der Zuverlässigkeit derartiger Systeme eine besondere Bedeutung zu. Die Sternsensoren bestehen aus einer Optik, einem lichtempfindlichen Matrixdetektor und einer Auswerteeinrichtung zur Berechnung von Lageinformationen des Flugobjekts anhand eines Vergleichs der erfassten Sternbildausschnitte mit einem Sternkatalog, der auf einem Inertialsystem basiert. Durch die Anwendung mehrerer Sternsensoren in einem System lassen sich Messgenauigkeit der Lage und Zuverlässigkeit erhöhen.

Eine Lagebestimmung derartiger Flugobjekte wie beispielsweise Satelliten, Raumstationen, Raumfähren und dergleichen erfolgt mittels eines Verfahrens unter Auswertung der Daten eines oder mehrerer Sternsensoren, die mittels eines vorgegebenen Gesichtsfeldes auf einen Ausschnitt des Sternhimmels, im Folgenden Sternbildausschnitt, ausgerichtet sind und mittels Bilderkennung den in einem Matrixdetektor erfassten Sternbildausschnitt mit einem in einem Speicher vorgehaltenen Sternkatalog vergleichen. Nach Zuordnung des Sternbildausschnitts wird die Lage des Flugobjekts ermittelt, indem beispielsweise nach dem QUEST-Algorithmus aus den gemessenen Sternvektoren und den Daten des Sternkatalogs die Eulerwinkel und/oder Quaternionen bestimmt und vom Koordinatensystem des Sensorsystems auf das Koordinatensystem des Flugobjekts transformiert werden. Je mehr Sterne in dem Sensorsystem ausgewertet werden, umso größer ist seine Messgenauigkeit. Durch Ausrichtung der einzelnen Sensoren in verschiedene Blickrichtungen erreicht man, dass die Fehler der drei Raumwinkel (Eulerwinkel) etwa gleich groß und minimal sind.

Aus der EP 1 111 402 A1 ist ein Sensorsystem bekannt, bei dem drei Sternsensoren mit in unterschiedliche Richtungen ausgerichteten Gesichtsfeldern angeordnet sind, wobei jeder Sternsensor die Sternpositionen erfasst und diese an eine zentrale Auswerteeinrichtung ausgibt, in der die Lage des Sensorsystems ermittelt und aus der Ausrichtung des Sensorsystems gegenüber einem Flugobjekt die Lage des Flugobjekts ermittelt wird. Die Sternkameras befinden sich zur Vermeidung zusätzlicher Fehlern auf einem festen Block. Untersuchungen der Zuverlässigkeit des Systems werden nicht durchgeführt.

Aus der US 6,285,927 B1 ist eine Vorrichtung und ein Verfahren zur Bestimmung einer Lage eines Raumfahrzeugs bekannt, bei dem mehrere, auf unterschiedlichen Messprinzipien beruhende Sensoren zur Ermittlung der Lage des Raumfahrzeugs erfasste und überarbeitete Daten an einen Zentralrechner des Raumfahrzeugs übermitteln, der eine Lageberechnung des Raumfahrzeugs ausführt.

Aus der US 2003/0080255 A1 sind ein Verfahren und eine Vorrichtung zur Ermittlung der Ladungsverteilung in einem Raumfahrzeug bekannt, wobei das Raumfahrzeug ladungsabhängig verformt wird und die an diesem befestigte Lagesensoren dadurch voneinander abweichende Lagesignale erfassen. Es wird daher vorgeschlagen, einen als Slave-Sensor betriebenen Lagesensor durch einen als Master-Sensor betriebenen Lagesensor zu korrigieren.

Da die Lage eines Flugobjektes entscheidend für die Erfüllung der vorgesehenen Mission ist, wird eine hohe Zuverlässigkeit des Sensorsystems gefordert.

Aufgabe der Erfindung ist daher, ein Sensorsystem zur Lagebestimmung vorzuschlagen, das eine verbesserte Genauigkeit aufweist und Störungen infolge von Ausfällen einzelner Sternsensoren oder Komponenten des Systems kompensiert oder reduziert.

Die Aufgabe wird durch ein Verfahren zur Lagebestimmung eines Flugobjekts mit einem Sensorsystem gemäß Anspruch 1 gelöst, wobei die Sternsensoren über ein Bussystem in Signalverbindung zueinander stehen und auf diese Weise Daten zur Sicherung einer hohen Messgenauigkeit auch bei Ausfällen von Komponenten übertragen werden. Jeder einzelne Sternsensor ist vorzugsweise in der Lage, autonom eine Lagebestimmung durchzuführen. In dem Bussystem werden Signale wie Daten verschiedener Datenverarbeitungsebenen unterschiedlichen Verarbeitungsgrades ausgetauscht, wodurch die Wirkung von Ausfällen von Komponenten einzelner Sternsensoren entsprechend ihrer Funktion unterdrückt werden kann.

Es hat sich zur Durchführung des Verfahrens als vorteilhaft erwiesen, wenn ein Sternsensor als Mastersensor festgelegt wird. Als Mastersensor wird bevorzugt ein Sternsensor ausgewählt, der eine besonders stabile Befestigung an einer Plattform des Flugobjektes hat.

Die Koordinatensysteme der einzelnen Sternsensoren resultieren aus der x-y-Ebene des Matrixdetektors und der z-Achse in Blickrichtung. Ein Masterkoordinatensystem stellt das

Koordinatensystem des Sensorsystems dar. Dabei muss das Masterkoordinatensystem nicht zwangsweise mit dem Koordinatensystem des Mastersensors übereinstimmen. Durch Koordinatentransformation lassen sich die Lagedaten der einzelnen Sternsensoren des Sensorsystems in das Masterkoordinatensystem transformieren. Ebenso kann die Transformation des Masterkoordinatensystems auf das Koordinatensystem des Flugobjekts mittels einer Lagematrix beispielsweise in Form einer Richtungscosinusmatrix erfolgen, so dass das Flugobjekt die aktuelle und laufend korrigierte Lage in Form von Eulerwinkeln und/oder Quaternionen erhält.

Die einzelnen Sternsensoren bestehen vorzugsweise aus einem Objektiv, dem Matrixdetektor, einer Baugruppe zur Berechnung der Sternvektoren und der Elimination unerwünschter Signale, einer Baugruppe mit Sternkatalog zur Sternidentifikation, einer Baugruppe zur Berechnung der Lageinformation, vorzugsweise nach dem QUEST-Algorithmus, einer Bussteuereinheit mit Businterface, die die Informationen für das Bussystem auswählt, codiert und das Bussystem steuert und die Ausgabebaugruppe der Lageinformation des Masterkoordinatensystems oder des Flugobjektes gemäß dem zugrunde gelegten Inertialsystem sowie einer Supervisoreinheit, die die Arbeit aller Baugruppen eines Sensors überwacht, ein Qualitätssignal ableitet und mit der Bussteuereinheit zusammenarbeitet und einen abhängig von eine Qualität bestimmenden Größen wie beispielsweise Funktion und Fehlfunktion von Baugruppen der einzelnen Sternsensoren und dergleichen zweckmäßigen Informationsaustausch zwischen den Sternsensoren sichert. Außerdem besitzt jeder Sternsensor einen Taktgeber und eine Stromversorgungseinheit. In bevorzugter Weise arbeiten die Sternsensoren des Sensorsystems mit ihren Baugruppen parallel, das heißt, in heißer Redundanz. Zur Erhöhung der Genauigkeit des Sensorsystems werden über das Bussystem die Lageinformationen der Sensoren in einer Funktionseinheit, beispielsweise im Mastersensor zusammengeführt. Außerdem besteht die Möglichkeit die Lageinformationen der einzelnen Sternsensoren miteinander zu vergleichen, um mögliche Fehlausrichtungen einzelner Sternsensoren festzustellen. Im Falle des Ausfalls einer Baugruppe übernimmt ein nächster Sternsensor die Funktion der ausgefallenen Baugruppe mit. Dafür ist ein zweckvoller Informationsaustausch über das Bussystem erforderlich. Im Sinne einer rationellen und kostengünstigen Fertigung sind die Sternsensoren des Sensorsystems gleich aufgebaut und auch einzeln einsetzbar. Wenn das Sensorsystem aus gleichartigen Sternsensoren aufgebaut ist, stehen genügend redundante Baugruppen zu Verfügung, um eine hohe Zuverlässigkeit bei entsprechend gesteuertem Informationsaustausch zwischen den Sternsensoren zu sichern.

Das Bussystem kann Signale oder Daten in vorzugsweise drei Datenverarbeitungsebenen zwischen den Sternsensoren des Sensorsystems austauschen. Das Sensorsystem kann redundant oder nichtredundant ausgeführt werden. Dies bedeutet, dass Sternsensoren unterschiedliche und/oder gleiche Gesichtsfelder erfassen können.

Eine erste Datenverarbeitungsebene betrifft beispielsweise die gemessenen Sternvektoren, das sind Einheitsvektoren im Sensorkoordinatensystem, die mit dem Matrixdetektor erfasst werden. Die Daten sind einfach vorverarbeitet, indem Fremdlichtquellen aussortiert sind. Sie haben eine Analog-Digital-Umsetzung passiert, und eine Subpixelinterpolation wurde bereits ausgeführt. Der Umfang der in dieser Ebene zu übertragenden Daten hängt von der Zahl der im jeweiligen Sensor beobachteten Sterne ab.

In einer zweiten, für den Datenaustausch zwischen den Sternsensoren bevorzugten Datenverarbeitungsebene werden aufbereitete Daten übertragen. Für die Erzeugung dieser Daten ist die Sternbildidentifikation notwendig. Es werden Ausdrücke berechnet, die für die Durchführung des QUEST-Algorithmus gebraucht werden. Der Vorteil dieser Form der Datenübertragung ist deren reduzierter Übertragungsaufwand über die Signalverbindung bei einer Erzielung einer mit den Daten der ersten Datenverarbeitungsebene vergleichbaren Genauigkeit.

Da die Lageberechnung bei Sternsensoren bevorzugt nach dem sogenannten QUEST-Algorithmus erfolgt, kann eine Datenvorverarbeitung in der zweiten Datenverarbeitungsebene beispielsweise wie folgt ausgeführt werden:

Die Elemente eines die Lage eines Sensorsystems wiedergebenden Quaternionenvektors q ergeben sich aus den Eigenwerten der 4×4-Matrix K:

$$K = \begin{pmatrix} S - I\sigma & Z \\ Z' & \sigma \end{pmatrix} \qquad (1)$$

mit

$$B = \sum_i v_i \cdot w'_i \qquad (2)$$

$$S = B' + B \qquad (3)$$

$$\sigma = trace(B) \qquad (4)$$

$$Z = \sum_i v_i \times w_i \qquad\qquad (5)$$

und der 3x3-Einheitsmatrix I.

Die 3x3-Matrix B und der Vektor Z enthalten die gemessenen Sternvektoren $v_i$ und die zugehörigen Referenzvektoren $w_i$ aus dem Sternkatalog. Wegen der additiven Verknüpfung der Sternvektoren in den Gleichungen (2) und (5) können die Matrix B und der Vektor Z als Interfacegrößen der zweiten Datenverarbeitungsebene als vorverarbeitete Sternvektoren verwendet und über das Bussystem übertragen werden:

$$B = \sum B_k \qquad\qquad (6)$$

$$Z = \sum Z_k \ . \qquad\qquad (7)$$

$B_k$ und $Z_k$ sind die Daten des k-ten Sternsensors. Auf diese Weise wird eine gegenüber der ersten Datenverarbeitungsebene gleichbleibende Genauigkeit der Sternvektorverknüpfung bei einer geringeren Anzahl von Variablen und damit bei geringerem Übertragungsaufwand erzielt.

In einer dritten Datenverarbeitungsebene werden die Lageinformationen in Form von Eulerwinkeln und/oder Quaternionen von jedem einzelnen Sternsensor bereitgestellt und auf das Masterkoordinatensystem transformiert. Diese Daten können ebenfalls über das Bussystem übertragen werden. Die berechneten Eulerwinkel und/oder Quaternionen der einzelnen Sternsensoren weichen im Allgemeinen nur geringfügig voneinander ab. Die resultierende Lage des Flugobjektes, bezogen auf das Masterkoordinatensystem kann dann durch Mittelwertbildung der zugehörigen Eulerwinkel oder der Elemente des Quaternionenvektors berechnet werden. Alternativ oder zusätzlich zu dieser Berechnungsmethode können Berechnungen der Lage des Flugobjekts auf der Grundlage der ersten und/oder zweiten Datenverarbeitungsebene erfolgen. Abweichungen von einer vorgegebenen, beispielsweise durch Mittelwertbildung der anderen Sternsensoren gebildeten Größe der Lagedaten eines Sternsensors deuten auf eine Fehlfunktion oder Fehlausrichtung des betreffenden Sternsensors hin. Die Lagedaten der kommunizierenden Sternsensoren lassen sich zur Korrektur von Fehlausrichtungen verwenden. Die Lagedaten des Mastersensors, der besonders stabil mit der Plattform des Flugobjektes verbunden ist, können dabei als Referenz dienen. Die Abweichungen der Lagedaten eines Sensors werden zur Berechnung einer Lagematrix benutzt, mit der die Sternvektoren des fehlausgerichteten Sternsensors vor der weiteren Verarbeitung transformiert werden, um so die mögliche Fehlausrichtung eines Sternsensors zu kompensieren und die resultierende Genauigkeit zu erhöhen. Die Verwendung dieser Datenverarbeitungsebene zur gegenseitigen Korrektur gegebenenfalls vorhandener Abweichungen zeichnet sich durch eine besonders einfache Datenübertragung und eine einfache Kompensation gegebenenfalls bestehender Abweichungen der ermittelten Lagen der Sternsensoren beispielsweise im Masterkoordinatensystem, im Koordinatensystem des Flugobjekts oder im Inertialsystem des Sternkatalogs aus.

Die Kooperation von Sternsensoren in verschiedenen Ebenen mit unterschiedlichem Verarbeitungsgrad der Daten ermöglicht außerdem die Kompensation von Ausfällen von Baugruppen eines oder mehrerer Sternsensoren. Das ist besonders von Bedeutung, da sich die Sternsensoren an der Außenhaut des Flugkörpers befinden und dort besonders harten Umweltbedingungen ausgesetzt sind. Wenn beispielsweise eine Supervisoreinheit eines Sternsensors den Ausfall der Baugruppe Sternbildidentifikation feststellt, dann können die Sternvektoren zu einem anderen Sternsensor vorzugsweise zum Mastersensor übertragen werden. Dort kann dann die Sternbildidentifikation und die weitere Datenverarbeitung durchgeführt werden.

Die drei beschriebenen Datenverarbeitungsebenen ermöglichen eine hohe Flexibilität beim sicheren Betrieb der Sternsensoren. Die folgende Tabelle 1 gibt eine Übersicht über das Verhalten eines Sensorsystems anhand typischer - nicht abschließend aufgeführter Ausfälle, wobei die in den fett gedruckten Tabellenzeilen angegebenen Zustände mittels des vorgeschlagenen Verfahren mit erhöhter Messgenauigkeit gelöst werden können.

Tabelle 1

| Ausgefallene Baugruppe | Maßnahme | Ergebnis |
|---|---|---|
| Optisches System und Matrixdetektor | Vorzugsweise Abschalten des betreffenden Sensors | Reduzierte Genauigkeit bei der Lagebestimmung |

(fortgesetzt)

| Ausgefallene Baugruppe | Maßnahme | Ergebnis |
|---|---|---|
| Berechnung der Sternvektoren | Abschalten des betreffenden Sensors oder reduzierter Betrieb | Reduzierte Genauigkeit bei der Lagebestimmung |
| **Sternidentifikation** | **Übertragung der Sternvektoren zu einem anderen Sensor über das Bussystem** | **Kein Verlust an Genauigkeit** |
| **Lageberechnung, Quaternionenberechnung** | **Übertragung der vorverarbeitenen Sternvektordaten (mittlere Verarbeitungsebene)** | **Kein Verlust an Genauigkeit** |
| **Ausgabeinterface** | **Übertragung der vorverarbeitenen Sternvektordaten (mittlere Verarbeitungsebene)** | **Kein Verlust an Genauigkeit** |
| Stromversorgungseinheit | Abschalten des Sensors | Verlust an Genauigkeit bei der Lagebestimmung |

Der störungsfreie Betrieb wird vorzugsweise über den Mastersensor realisiert, der die Lageinformation der anderen Sternsensoren vorzugsweise über die mittlere Datenverarbeitungsebene erhält. Die anderen Sternsensoren arbeiten in heißer Redundanz und liefern ebenfalls Lageinformationen jedoch mit geringer Genauigkeit. Wesentliche Abweichungen der berechneten Lage von der des Mastersensors können genutzt werden, über die geeignete Definition einer Richtungscosinusmatrix die Sternvektoren des fehlausgerichteten Sternsensors zu korrigieren.

Ein Flugobjekt enthält die für die Durchführung des Verfahrens optimierten Sternsensoren, die insbesondere bezüglich hoher Genauigkeit, geringem Streulichteinfluss, großer mechanischer Stabilität, hoher Strahlenfestigkeit, geringem Energieverbrauch, geringem Gewicht, ausreichender Rechenleistung und ausreichender Größe des Sternkatalogs ausgelegt sind. Bevorzugt werden Sternsensoren mit einem Gesichtsfeld von etwa 20° x 20° beziehungsweise einem kreisrunden Gesichtsfeld von 20° eingesetzt.

Die miteinander vernetzten Sternsensoren eines Sensorsystems zur Durchführung des vorgeschlagenen Verfahrens können insbesondere bei einem Ausfall eines oder mehrerer Sternsensoren oder des Bussystems in herkömmlicher Weise verwendet werden.

Die Erfindung umfasst neben dem vorgeschlagenen Verfahren ein Sensorsystem mit miteinander vernetzten Sternsensoren wie in diesen Anmeldungsunterlagen beschrieben zur Durchführung des vorgeschlagenen Verfahrens

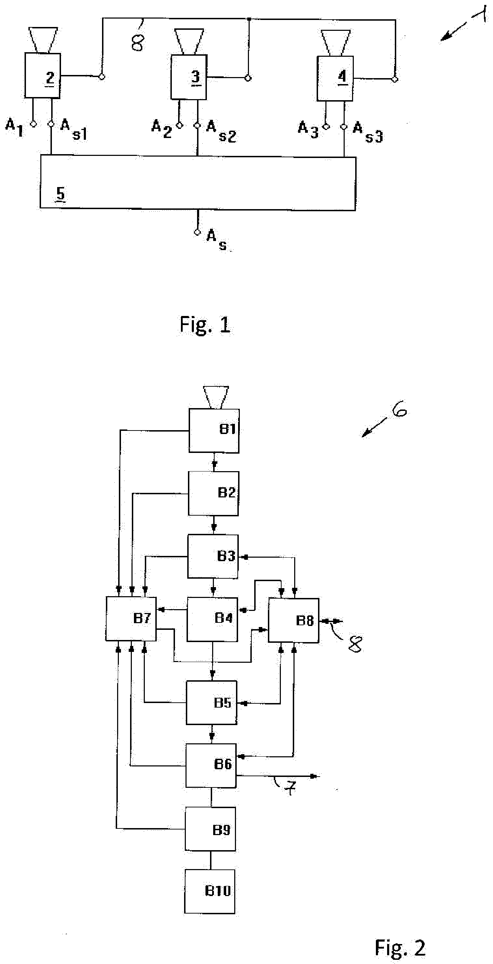

Die Erfindung wird anhand der in den Figuren 1 und 2 gezeigten Ausführungsbeispiele näher erläutert. Dabei zeigen:

Figur 1    eine schematische Darstellung eines Sensorsystems mit einem Bus zur Signalverbindung der Sternsensoren,
Figur 2    eine schematische Darstellung eines Sternsensors mit seinen Baugruppen.

Figur 1 zeigt das in einem nicht dargestellten Flugobjekt installierte Sensorsystem 1 mit den mittels des Bussystems 8 in Signalverbindung stehenden Sternsensoren 2, 3, 4. Die Sternsensoren 2, 3, 4 sind hierbei entgegen der vereinfachenden Darstellungen bevorzugt mittels ihrer optischen Achsen in die drei unterschiedlichen Raumrichtungen ausgerichtet. Über die über das Bussystem 8 eingestellte Signalverbindung werden Daten von beispielsweise drei verschiedenen Datenverarbeitungsebenen je nach den Anweisungen der Bussteuereinheiten der einzelnen Sensoren 2, 3, 4 bidirektional übertragen. Alternativ können an den Sternsensoren 2, 3, 4 weitere Schnittstellen mit verschiedenen Signalverbindungen vorgesehen sein. Im störungsfreien Betrieb werden die vorverarbeiteten Signale der zweiten Datenverarbeitungsebene der Sternsensoren 3 und 4 zum als Mastersensor vorgesehenen Sternsensor 2 übertragen. Im Mastersensor erfolgt dann die weitere Datenverarbeitung, vorzugsweise mit dem QUEST-Algorithmus und den notwendigen Transformationen zur Bestimmung der Lage des Masterkoordinatensystems und der Lage des Flugobjektes in Form von Eulerwinkeln und/oder Quaternionen. Parallel dazu bestimmen im störungsfreien Betrieb die Sternsensoren 3, 4, die nicht Mastersensor sind, autonom mit den eigenen gemessenen Sternvektoren die Lagen der Sternsensoren 3, 4 und transformieren diese in das Masterkoordinatensystem. Bei einwandfreier Funktion aller Sternsensoren 2, 3, 4 ergeben sich im Wesentlichen gleiche Lagedaten bezogen auf das Masterkoordinatensystem. Falls der Mastersensor in Form des Sensors 2 ausfällt, übernimmt einer der Sternsensoren 3, 4 des Sensorystems 1 die Funktion des Mastersensors. Wenn Baugruppen der Sternsensoren 3,4 ausfallen, die nicht Mastersensor sind, dann sorgt die Supervisoreinheit dafür, in welcher Datenverarbeitungsebene störungsfreie Signale des gestörten Sensors zum Mastersensor übertragen werden können, so dass das resultierende Lagesignal aus möglichst vielen Sternen bestimmt werden kann.

Die Sternsensoren 2, 3, 4 verfügen neben nicht dargestellten Versorgungsanschlüssen über jeweils zwei Ausgänge, von denen die Ausgänge $A_1$, $A_2$, $A_3$, die nicht korrigierte Lage beispielsweise in Form eines Quaternionenvektors ausgeben, während die Ausgänge $A_{s1}$, $A_{s2}$, $A_{s3}$ jeweils eine korrigierte Lage des jeweiligen Sternsensors 2, 3, 4 beispielsweise in Form eines Quaternionenvektors wiedergeben, wobei diese bevorzugt mittels der Daten der übrigen Sternsensoren korrigiert ist. Die Ausgänge $A_{s1}$, $A_{s2}$, $A_{s3}$ werden von der Auswerteeinrichtung 5 erfasst und dort beispielsweise unter entsprechender Wichtung vertrauenswürdiger Lageinformationen, Unterdrückung nicht vertrauenswürdiger Lageinformationen und dergleichen als zusammengefasste Lage bestimmt, die beispielsweise vom Masterkoordinatensystem in ein Koordinatensystem des Flugobjekts transformiert werden kann und beispielsweise als Quaternionenvektor über den Ausgang $A_s$ an eine Steuerung des Flugobjekts ausgegeben wird.

Figur 2 zeigt eine schematische Darstellung des im Wesentlichen den Sternsensoren 2, 3, 4 der Figur 1 entsprechenden Sternsensors 6 bestehend aus Sternkamera B1 mit Objektiv und Matrixdetektor, einer Analogdatenvorverarbeitung B2 mit anschließender AD-Umsetzung, einer digitalen Datenverarbeitung B3 mit Centroiding und Sternvektorberechnung, einer Sternbildidentifikation B4 mit Sternkatalog, einer Einheit B5 zur Berechnung der Quaternionen und/oder Eulerwinkel, einer Ausgabeeinheit B6 mit Berechnung der resultierenden beziehungsweise korrigierten Lagedaten und Übertragung dieser an das Flugobjekt über die Datenleitung 7, einer Supervisoreinheit B7 zur Funktionsüberwachung der Baugruppen des Sternsensors 6, einer Bussteuereinheit B8 , einem Taktgeber B9 und einer Stromversorgung B10. Im störungsfreien Fall überträgt das Bussystem 8 vorzugsweise die Signale $B_k$ und $Z_k$ der zweiten Datenverarbeitungsebene von den übrigen Sternsensoren zu dem Mastersensor. Wenn die Supervisoreinheit B7 Störungen feststellt, wird abhängig von den gestörten Baugruppen eine Signalübertragung gewählt, die die maximale Genauigkeit des Sensorsystems 1 (Figur 1) realisiert. Die Verarbeitungseinheit 5 (Figur 1) zur Korrektur von Lagedaten kann sowohl in den Sternsensoren als auch als selbständige Einheit realisiert werden. Obwohl alle Sternsensoren des Sensorsystems vorzugsweise gleichartig aufgebaut sind, können abhängig von Betriebszuständen des Flugobjekts und/oder des Sensorsystems einige Baugruppen abgeschaltet oder nicht implementiert sein, um beispielsweise Energie zu sparen.

**Bezugszeichenliste**

| | |
|---|---|
| 1 | Sensorsystem |
| 2 | Sternsensor |
| 3 | Sternsensor |
| 4 | Sternsensor |
| 5 | Auswerteeinrichtung |
| 6 | Sternsensor |
| 7 | Datenleitung |
| 8 | Bussystem |
| $A_1$ | Ausgang |
| $A_2$ | Ausgang |
| $A_3$ | Ausgang |
| $A_{s1}$ | Ausgang |
| $A_{s2}$ | Ausgang |
| $A_{s3}$ | Ausgang |
| $A_s$ | Ausgang |
| B1 | Sternkamera mit Objektiv und Matrixdetektor |
| B2 | Analogdatenvorverarbeitung und AD-Umsetzung |
| B3 | Digitale Datenverarbeitung, Centroiding, Sternvektorberechnung |
| B4 | Sternbildidentifikation mit Sternkatalog |
| B5 | Berechnung der Quaternionen und/oder Eulerwinkel |
| B6 | Ausgabeinterface |
| B7 | Supervisoreinheit |
| B8 | Bussteuereinheit |
| B9 | Taktgeber |
| B10 | Stromversorgung |

**Patentansprüche**

1. Verfahren zur Lagebestimmung eines Flugobjekts mit einem Sensorsystem (1) mit mehreren mittels jeweils einer Optik und eines lichtempfindlichen Matrixdetektors Sternbildausschnitte erfassenden Sternsensoren (2, 3, 4, 6) mit gleichen oder unterschiedlichen Gesichtsfeldern, unterschiedlichen Blickrichtungen und einer Auswerteeinrichtung (5) zur Berechnung von Lageinformation des Flugobjekts anhand eines Vergleichs der erfassten Sternbildausschnitte mit einem Sternkatalog, **dadurch gekennzeichnet, dass** eine erste Datenverarbeitungsebene Sternvektoren, eine zweite Datenverarbeitungsebene aus den Sternvektoren anhand des Sternkatalogs aufbereitete Daten und eine dritte Datenverarbeitungsebene Lageinformationen in Form von Eulerwinkeln und/oder Quaternionen der jeweiligen Sternsensoren (2, 3, 4, 6) umfasst und die Sternsensoren (2, 3, 4, 6) untereinander über ein Bussystem (8) Daten zumindest einer Datenverarbeitungsebene zur Verbesserung der Messgenauigkeit austauschen.

2. Verfahren nach Anspruch 1, **dadurch gekennzeichnet, dass** die Daten zumindest eines Sternsensors (2, 3, 4, 6) zumindest einer Datenverarbeitungsebene über das Bussystem (8) auf einen anderen, fehlerhaft arbeitenden Sternsensor (2, 3, 4, 6) übertragen werden.

3. Verfahren nach Anspruch 1 oder 2, **dadurch gekennzeichnet, dass** die Daten zumindest einer Datenverarbeitungsebene zumindest eines Sternsensors (2, 3, 4, 6) auf die Auswerteeinheit (5) oder einen als Mastersensor eingesetzten Sternsensor (2, 3, 4, 6) übertragen werden.

4. Verfahren nach einem der Ansprüche 1 bis 3, **dadurch gekennzeichnet, dass** eine Lage des Flugobjekts anhand einer Mittelwertbildung der Daten zumindest einer der Datenverarbeitungsebenen ermittelt wird.

5. Verfahren nach einem der Ansprüche 1 bis 4, **dadurch gekennzeichnet, dass** eine Fehlfunktion eines Sternsensors (2, 3, 4, 6) anhand einer zumindest in einer Datenverarbeitungsebene vorgegebenen Abweichung gegenüber einem Mittelwert der anderen Sternsensoren (2, 3, 4, 6) ermittelt wird.

6. Verfahren nach einem der Ansprüche 1 bis 5, **dadurch gekennzeichnet, dass** ein Fehler und/oder eine Fehlausrichtung eines Sternsensors (2, 3, 4, 6) mittels der Daten zumindest einer Datenverarbeitungsebene zumindest eines Sternsensors (2, 3, 4, 6) korrigiert werden.

7. Verfahren nach einem der Ansprüche 1 bis 6, **dadurch gekennzeichnet, dass** ein verglichen mit den anderen Sternsensoren (2, 3, 4, 6) besonders fest mit einer Plattform des Flugobjekts verbundener Sternsensor (2, 3, 4, 6) als Mastersensor festgelegt wird und dessen Daten zumindest einer Datenverarbeitungsebene mit erhöhter Wichtung in eine Ermittlung oder Korrektur eine Lage des Flugobjekts und/oder Korrektur eines Sternsensors (2, 3, 4, 6) eingehen.

8. Sensorsystem (1) zur Lageregelung eines Flugobjekts mit mehreren mittels jeweils einer Optik und eines lichtempfindlichen Matrixdetektors Sternbildausschnitte erfassenden Sternsensoren (2, 3, 4, 6) mit gleichen oder unterschiedlichen Gesichtsfeldern, unterschiedlichen Blickrichtungen und einer Auswerteeinrichtung (5) zur Berechnung von Lageinformation des Flugobjekts anhand eines Vergleichs der erfassten Sternbildausschnitte mit einem Sternkatalog zur Durchführung des Verfahrens nach einem der Ansprüche 1 bis 7.

**Claims**

1. Method for determining the position of a flying object using a sensor system (1) comprising a plurality of star sensors (2, 3, 4, 6) detecting sections of constellations by means of an optical system and a light-sensitive matrix detector respectively, each of the star sensors having the same or different fields of vision, different viewing directions and an evaluation unit (5) for calculating the position information of the flying object with reference to a comparison of the detected constellation sections with a star catalogue, **characterised in that** a first data processing level comprises star vectors, a second data processing level comprises data processed from the star vectors on the basis of the star catalogue and a third data processing level comprises position information in the form of Euler angles and/or quaternions of the respective star sensors (2, 3, 4, 6), and the star sensors (2, 3, 4, 6) exchange data from at least one data processing level transmitted via a bus system (8) to improve the measurement precision.

2. Method according to claim 1, **characterised in that** the data of at least one star sensor (2, 3, 4, 6) of at least one data processing level are transmitted via the bus system (8) to another, faulty star sensor (2, 3, 4, 6).

**3.** Method according to claim 1 or 2, **characterised in that** the data of at least one data processing level of at least one star sensor (2, 3, 4, 6) are transmitted to the evaluation unit (5) or a star sensor (2, 3, 4, 6) used as the master sensor.

**4.** Method according to any of claims 1 to 3, **characterised in that** the position of the flying object is determined by averaging the data of at least one of the data processing levels.

**5.** Method according to any of claims 1 to 4, **characterised in that** a malfunction of one of the star sensors (2, 3, 4, 6) is determined on the basis of a deviation from an averaged value of the other star sensors (2, 3, 4, 6), the deviation being prescribed in at least one data processing level.

**6.** Method according to any of claims 1 to 5, **characterised in that** a malfunction and/or an incorrect orientation of one of the star sensors (2, 3, 4, 6) is corrected using the data of at least one data processing level of at least one star sensor (2, 3, 4, 6).

**7.** Method according to any of claims 1 to 6, **characterised in that** one star sensor (2, 3, 4, 6) which is attached more firmly to a platform of the flying object compared to the other star sensors (2, 3, 4, 6) is defined as the master sensor, and its data from at least one data processing level is given greater weighting when determining or correcting a position of the flying object and/or correcting a star sensor (2, 3, 4, 6).

**8.** Sensor system (1) for controlling the position of a flying object comprising a plurality of star sensors (2, 3, 4, 6) detecting sections of constellations by means of an optical system and a light-sensitive matrix detector, the star sensors having the same or different fields of vision, different viewing directions and an evaluation device (5) for calculating the position information of the flying object by a comparison of the detected constellation sections with a star catalogue in order to perform the method according to any of claims 1 to 7.

**Revendications**

**1.** Procédé pour déterminer la position d'un objet volant avec un système de capteurs (1) comportant plusieurs capteurs d'étoiles (2, 3, 4, 6) détectant des extraits de constellations, chacun au moyen d'une optique et d'un détecteur de matrice photosensible, présentant des champs visuels identiques ou différents, différentes directions de visée et un dispositif d'évaluation (5) pour calculer des informations de position de l'objet volant à l'aide d'une comparaison des extraits de constellations détectés avec un catalogue d'étoiles, **caractérisé en ce qu'**un premier étage de traitement de données comprend des vecteurs d'étoiles, un deuxième étage de traitement de données comprend des données traitées à partir des vecteurs d'étoiles à l'aide du catalogue d'étoiles, et un troisième étage de traitement de données comprend des informations de position sous forme d'angles d'Euler et/ou de quaternions des capteurs d'étoiles (2, 3, 4, 6) respectifs, et **en ce que** les capteurs d'étoiles (2, 3, 4, 6) échangent entre eux via un réseau de bus (8) des données d'au moins un étage de traitement de données pour améliorer la précision de mesure.

**2.** Procédé selon la revendication 1, **caractérisé en ce que** les données d'au moins un capteur d'étoiles (2, 3, 4, 6) d'au moins un étage de traitement de données sont transmises via le réseau de bus (8) à un autre capteur d'étoiles (2, 3, 4, 6) fonctionnant de manière incorrecte.

**3.** Procédé selon l'une des revendications 1 ou 2, **caractérisé en ce que** les données d'au moins un étage de traitement de données d'au moins un capteur d'étoiles (2, 3, 4, 6) sont transmises à l'unité d'évaluation (5) ou à un capteur d'étoiles (2, 3, 4, 6) utilisé en tant que capteur maître.

**4.** Procédé selon l'une des revendications 1 à 3, **caractérisé en ce qu'**une position de l'objet volant est déterminée à l'aide d'une formation de valeur moyenne des données d'au moins un des étages de traitement de données.

**5.** Procédé selon l'une des revendications 1 à 4, **caractérisé en ce qu'**un fonctionnement incorrect d'un capteur d'étoiles (2, 3, 4, 6) est déterminé à l'aide d'une déviation prédéterminée au moins dans un étage de traitement de données par rapport à une valeur moyenne des autres capteurs d'étoiles (2, 3, 4, 6).

**6.** Procédé selon l'une des revendications 1 à 5, **caractérisé en ce qu'**une erreur et/ou un défaut d'alignement d'un capteur d'étoiles (2, 3, 4, 6) sont corrigés au moyen des données d'au moins un étage de traitement de données d'au moins un capteur d'étoiles (2, 3, 4, 6).

**7.** Procédé selon l'une des revendications 1 à 6, **caractérisé en ce qu'**un capteur d'étoiles (2, 3, 4, 6) relié de manière particulièrement solidaire à une plateforme d'un objet volant, en comparaison avec les autres capteurs d'étoiles (2, 3, 4, 6), est défini en tant capteur maître et **en ce que** les données de celui-ci, d'au moins un étage de traitement de données, sont prises en considération, avec pondération accrue, dans une détermination ou une correction d'une position de l'objet volant et/ou dans une correction d'un capteur d'étoiles (2, 3, 4, 6).

**8.** Système de capteurs (1) pour le contrôle de position d'un objet volant, comportant plusieurs capteurs d'étoiles (2, 3, 4, 6) détectant des extraits de constellations, chacun au moyen d'une optique et d'un détecteur de matrice photosensible, présentant des champs visuels identiques ou différents, différentes directions de visée et un dispositif d'évaluation (5) pour calculer des informations de position de l'objet volant à l'aide d'une comparaison des extraits de constellations détectés avec un catalogue d'étoiles, pour mettre en oeuvre le procédé selon l'une des revendications 1 à 7.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1111402 A1
- US 6285927 B1
- US 20030080255 A1